Europäisches Patentamt

European Patent Office

Office européen des brevets

(11) Veröffentlichungsnummer: **0 102 472 B1**

(12) **EUROPÄISCHE PATENTSCHRIFT**

(45) Veröffentlichungstag der Patentschrift:
04.06.86

(21) Anmeldenummer: 83106436.5

(22) Anmeldetag: 01.07.83

(51) Int. Cl.⁴: **G 01 B 11/02** // G01B11/04

(54) Längen- oder Winkelmesseinrichtung.

(30) Priorität: 11.08.82 DE 3229846

(43) Veröffentlichungstag der Anmeldung:
14.03.84 Patentblatt 84/11

(45) Bekanntmachung des Hinweises auf die Patenterteilung:
04.06.86 Patentblatt 86/23

(84) Benannte Vertragsstaaten:
AT CH DE FR GB IT LI NL SE

(56) Entgegenhaltungen:
DE - A - 2 828 742
DE - A - 2 944 162
DE - A - 3 007 311

DRUCKSCHRIFT FA. DR. JOHANNES HEIDENHAIN
"INKREMENTALE DREHGEBER ROD, PROGRAMM
80/81" Seiten 40-43

(73) Patentinhaber: Dr. Johannes Heidenhain GmbH,
Nansenstrasse 17, D-8225 Traunreut (DE)

(72) Erfinder: Ernst, Alfons, Dipl.-Ing., Traunring 62,
D-8225 Traunreut (DE)

ACTORUM AG

## Beschreibung

Die Erfindung betrifft eine Längen- oder Winkelmesseinrichtung gemäss dem Oberbegriff des Anspruchs 1.

Bei einer bekannten Längenmesseinrichtung (DE-A-2 818 742) werden von einer Abtasteinheit zwei gegeneinander phasenversetzte Analogsignale erzeugt, von denen zur Einstellung der gegenseitigen Phasenlage der Analogsignale das eine Analogsignal am ersten Eingang einer Verstärkermischstufe anliegt, derem zweiten Eingang eine Regelspannung zugeführt wird, die vom anderen Analogsignal abgeleitet und über elektrische Stellglieder einstellbar ist. Diese Anordnung ist durch die benötigten elektrischen Elemente aufwendig und nicht ausfallsicher; zudem geht die Phaseneinstellung bei einem Austausch der diese elektrischen Elemente enthaltenden Auswerteeinrichtung verloren.

Es ist ferner bei photoelektrischen Positionsmesssystemen zur Einstellung der Amplituden der analogen Abtastsignale bekannt, den durch die Abtastfelder der Abtasteinheit fallenden Lichtstrom mittels Schrauben zu regeln (Druckschrift der FA. Dr. Johannes Heidenhain GmbH «Inkrementale Drehgeber Rod, Programm 80/81», Seiten 40-43).

Der Erfindung liegt die Aufgabe zugrunde, bei einer derartigen Positionsmesseinrichtung eine Einstellung des vorgegebenen Phasenwinkels mit einfachen Mitteln unabhängig von der Auswerteeinrichtung zu ermöglichen.

Diese Aufgabe wird erfindungsgemäss durch die Merkmale des Anspruchs 1 gelöst.

Die mit der Erfindung erzielten Vorteile bestehen insbesondere darin, dass die vorgeschlagenen Massnahmen eine störunanfällige Einstellung des Phasenwinkels erlauben, die auch bei einem Austausch der Auswerteeinrichtung erhalten bleibt.

Vorteilhafte Weiterbildungen der Erfindung entnimmt man den Unteransprüchen.

Ausführungsbeispiele der Erfindung werden anhand der Zeichnung näher erläutert.

Es zeigen

Fig. 1 schematisch eine bekannte Längenmesseinrichtung,

Fig. 2 eine Abtastplatte mit Merkmalen der Erfindung,

Fig. 3 ein Zeigerdiagramm der Analogsignale der Abtasteinheit,

Fig. 4 eine weitere Abtastplatte mit Merkmalen der Erfindung,

Fig. 5 ein weiteres Zeigerdiagramm der Analogsignale der Abtasteinheit,

Fig. 6 eine Schaltungsanordnung der Photoelemente und

Fig. 7 eine graphische Darstellung eines Analogsignals.

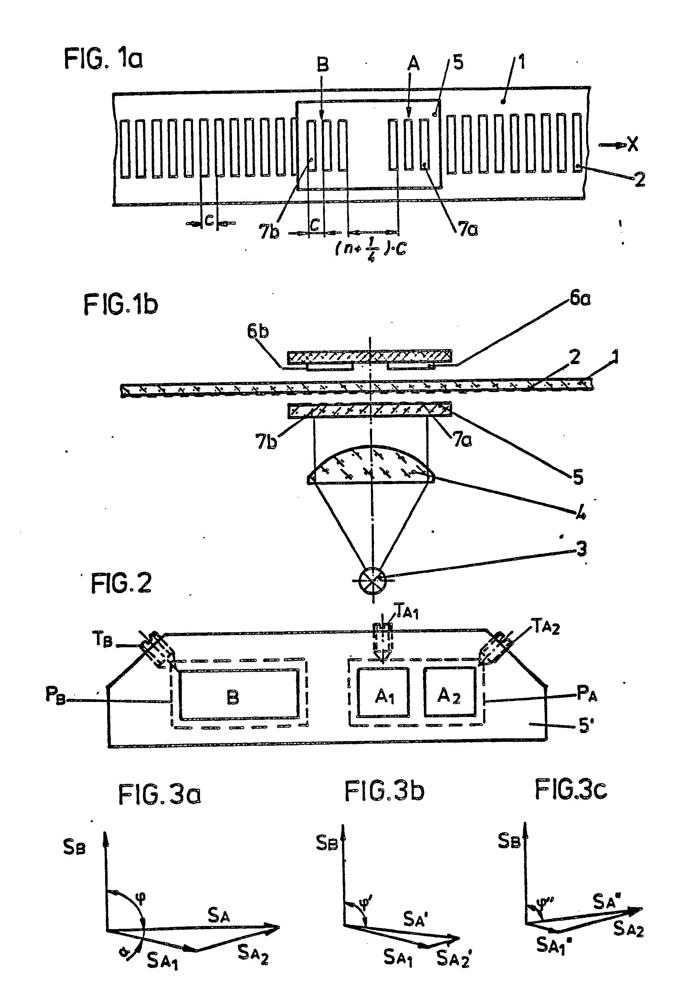

Figur 1a, b zeigt schematisch eine bekannte Längenmesseinrichtung mit einem Massstab 1, dessen inkrementale Teilung 2 von einer Abtasteinheit abgetastet wird, die eine Lampe 3, einen Kondensor 4, eine Abtastplatte 5 und Photoelemente 6a, 6b aufweist. Die Abtastplatte 5 besitzt zwei Abtastfelder A, B mit einer inkrementalen Teilung 7a, 7b, die wie die Teilung 2 des Massstabs 1 aus alternierend aufeinanderfolgenden transparenten und nichttransparenten Streifen mit einer Gitterkonstanten c bestehen; die Teilung 7a ist gegenüber der Teilung 7b um einen Betrag $(n + 1/4)$ c in Messrichtung X phasenversetzt. Das von der Lampe 3 ausgesandte Licht tritt durch den Kondensor 4, die Teilungen 7a, 7b der Abtastfelder A, B der Abtastplatte 5, die Teilung 2 des Massstabs 1 und trifft auf die Photoelemente 6a, 6b, die jeweils den Abtastfeldern A, B zugeordnet sind.

Bei der Relativbewegung zwischen der Abtasteinheit und dem Massstab 1 in Messrichtung X wird das Licht an den Teilungen 2, 7a, 7b moduliert, so dass die Photoelemente 6a, 6b zwei periodische Analogsignale $S_A$, $S_B$ erzeugen, die wegen der um c/4 phasenversetzten Teilungen 7a, 7b um einen Phasenwinkel $\varphi = 90°$ gegeneinander verschoben sind, um eine Richtungsdiskriminierung der Messbewegung und eine Unterteilung der Gitterperiode zu ermöglichen. Die Teilung 2 des Massstabs 1 und die Teilungen 7a, 7b der Abtastplatte 5 sind in geringem Abstand voneinander angeordnet, der aufgrund mechanischer Unvollkommenheiten gewissen Schwankungen unterworfen ist. Damit diese Schwankungen keine Änderung des Phasenwinkels $\varphi = 90°$ zwischen den beiden Analogsignalen $S_A$, $S_B$ bewirken, wird die Lampe 3 zum Kondensor 4 so justiert, dass das Licht möglichst parallel aus dem Kondensor 4 austritt. Infolge unvermeidlicher Fertigungstoleranzen kann dennoch ein Phasenwinkelfehler zwischen den Analogsignalen $S_A$, $S_B$ auftreten, der erst bei der elektrischen Inbetriebnahme der Messeinrichtung erkannt wird.

Zur Einstellung des für eine genaue Unterteilung der Gitterperiode erforderlichen Phasenwinkels $\varphi$ ohne Änderung der Parallelität des Lichtes ist erfindungsgemäss nach Fig. 2 auf einer Abtastplatte 5' ein Abtastfeld B und ein Abtastfeld A vorgesehen, das aus zwei Teilfeldern $A_1$, $A_2$ besteht. Gegenüber dem Abtastfeld B sind das Teilfeld $A_1$ um einen Phasenwinkel $(\varphi + \alpha)$ und das Teilfeld $A_2$ um einen Phasenwinkel $(\varphi - \alpha)$ versetzt. Dem Abtastfeld B sind ein Photoelement $P_B$ und den Teilfeldern $A_1$, $A_2$ gemeinsam ein Photoelement $P_A$ zur Gewinnung der periodischen Analogsignale $S_B$, $S_A$ zugeordnet (Fig. 3). Das Analogsignal $S_A$ setzt sich aus den analogen Teilsignalen $S_{A_1}$, $S_{A_2}$ zusammen, die mit Hilfe der Teilfelder $A_1$, $A_2$ gewonnen werden. Gegenüber dem Analogsignal $S_B$ sind das analoge Teilsignal $S_{A_1}$ um einen Phasenwinkel $(\varphi + \alpha)$ und das analoge Teilsignal $S_{A_2}$ um einen Phasenwinkel $(\varphi - \alpha)$ versetzt (Fig. 3a).

Gemäss Fig. 2 sind zur Einstellung des erforderlichen Phasenwinkels $\varphi$ in der Abtastplatte 5' für die Teilfelder $A_1$, $A_2$ Schrauben $T_{A_1}$, $T_{A_2}$ zur Regelung des durch die Teilfelder $A_1$, $A_2$ fallenden Lichtstroms vorgesehen. Durch Verkleinerung der Amplitude des analogen Teilsignals $S_{A_2}$ erhält man ein Teilsignal $S_{A_2}'$, das zusammen mit dem Teilsignal $S_{A_1}$ ein Analogsignal $S_A'$ ergibt, das gegenüber dem Analogsignal $S_B$ um einen Phasenwinkel $\varphi'$ grösser $\varphi$ versetzt ist (Fig. 3b). Durch Verkleinerung der Amplitude des analogen Teilsignals $S_{A_1}$ erhält man ein Teilsignal $S_{A_1}''$, das zusammen mit dem Teilsignal $S_{A_2}$ ein Analogsignal $S_A''$ ergibt, das gegenüber dem Analogsignal $S_B$ um einen Phasenwinkel $\varphi''$ kleiner $\varphi$ versetzt

ist (Figur 3c). Mittels einer Schraube $T_B$ für das Abtastfeld B lässt sich die Amplitude des Analogsignals $S_B$ regeln.

Vorteilhaft ist, dass für die Teilfelder $A_1$, $A_2$ nur ein Photoelement $P_A$ vorgesehen zu werden braucht. In nicht dargestellter Weise können den Teilfeldern $A_1$, $A_2$ auch separate Photoelemente zugeordnet werden, deren Analogsignale überlagert werden. Durch die Überlagerung der beiden Teilsignale

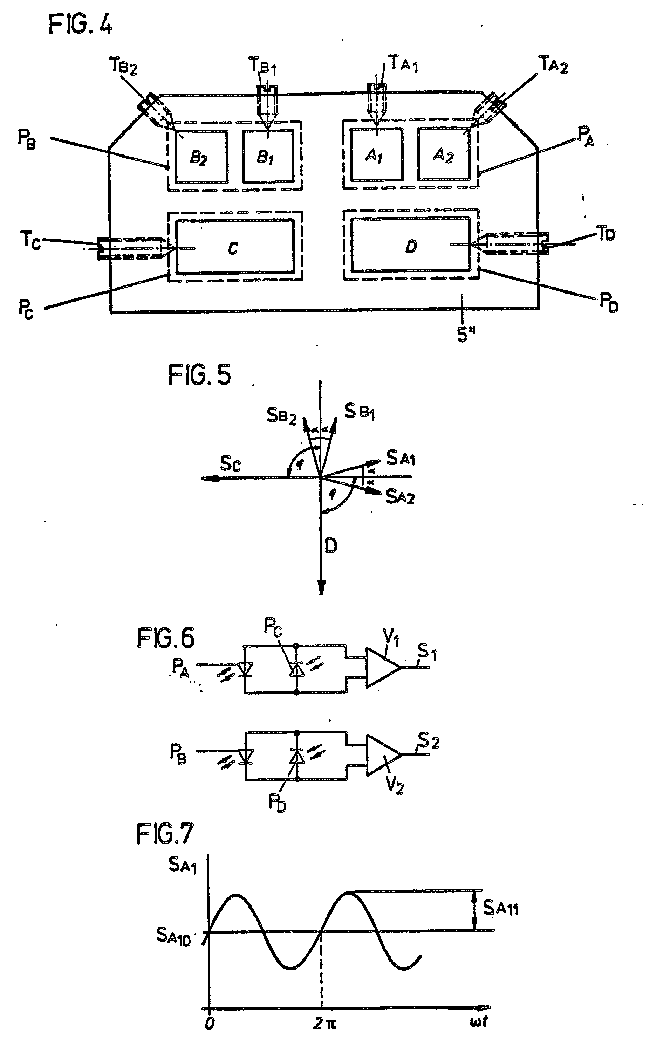

$S_{A_1} = S_{A_{10}} + S_{A_{11}} \sin (\omega t + \alpha)$ (Fig. 7) und
$S_{A_2} = S_{A_{20}} + S_{A_{21}} \sin (\omega t - \alpha)$

entsteht das resultierende Analogsignal $S_A$, das für den einfachsten Fall

$S_{A_{10}} = S_{A_{20}} = S_{A_0}/2$ und $S_{A_{11}} = S_{A_{21}} = S_{A_1}/2$ zu

$S_A = S_{A_0} + S_{A_1}/2 \cdot (\sin \omega t \cos \alpha + \cos \omega t \sin \alpha + \sin \omega t \cos \alpha - \cos \omega t \sin \alpha)$

$S_A = S_{A_0} + S_{A_1} \cdot \sin \omega t \cos \alpha$

wird. Der Kontrast K des resultierenden Analogsignals $S_A$

$K = $ Modulation / Gleichlicht $= S_{A_1} \cos \alpha / S_{A_0}$

nimmt also mit $\cos \alpha$ ab. Für praktische Fälle reicht $\alpha = 15°$ aus, so dass der Kontrast K maximal nur um $1 - \cos 15° = 3,4\%$ abnimmt.

In Fig. 4 ist eine Abtastplatte 5″ mit vier Abtastfeldern A, B, C, D dargestellt, die jeweils um einen Phasenwinkel $\varphi = 90°$ versetzt sind; das Abtastfeld A besteht aus zwei Teilfeldern $A_1$, $A_2$ und das Abtastfeld B aus zwei Teilfeldern $B_1$, $B_2$. Gegenüber dem Abtastfeld D sind das Teilfeld $A_1$ um den Phasenwinkel $(\varphi + \alpha)$ und das Teilfeld $A_2$ um den Phasenwinkel $(\varphi - \alpha)$ versetzt. Gegenüber dem Abtastfeld C sind das Teilfeld $B_1$ um den Phasenwinkel $(\varphi + \alpha)$ und das Teilfeld $B_2$ um den Phasenwinkel $(\varphi - \alpha)$ versetzt. Den Teilfeldern $A_1$, $A_2$ sind gemeinsam ein Photoelement $P_A$, den Teilfeldern $B_1$, $B_2$ gemeinsam ein Photoelement $P_B$, dem Abtastfeld C ein Photoelement $P_C$ und dem Abtastfeld D ein Photoelement $P_D$ zur Gewinnung der periodischen Analogsignale $S_A$, $S_B$, $S_C$, $S_D$ zugeordnet. Das Analogsignal $S_A$ setzt sich aus den analogen Teilsignalen $S_{A_1}$, $S_{A_2}$ (wie oben bereits beschrieben) und das Analogsignal $S_B$ aus den analogen Teilsignalen $S_{B_1}$, $S_{B_2}$ zusammen. Gegenüber dem Analogsignal $S_D$ sind das analoge Teilsignal $S_{A_1}$ um den Phasenwinkel $(\varphi + \alpha)$ und das analoge Teilsignal $S_{A_2}$ um den Phasenwinkel $(\varphi - \alpha)$ versetzt. Gegenüber dem Analogsignal $S_C$ sind das analoge Teilsignal $S_{B_1}$ um den Phasenwinkel $(\varphi + \alpha)$ und das analoge Teilsignal $S_{B_1}$ um den Phasenwinkel $(\varphi - \alpha)$ versetzt (Fig. 5).

Gemäss Fig. 4 sind zur Einstellung des erfoderlichen Phasenwinkels $\varphi$ in der Abtastplatte 5″ für die Teilfelder $A_1$, $A_2$, $B_1$, $B_2$ ebenfalls Schrauben $T_{A_1}$, $T_{A_2}$, $T_{B_1}$, $T_{B_2}$ zur Regelung des durch die Teilfelder $A_1$, $A_2$, $B_1$, $B_2$ fallenden Lichtstroms vorgesehen. Mittels Schrauben $T_C$, $T_D$ lassen sich die Amplituden der Analogsignale $S_C$, $S_D$ regeln.

Zur Eliminierung der Gleichspannungsanteile der um $180°$ phasenversetzten Analogsignale $S_A$, $S_C$ bzw. $S_B$, $S_D$ werden die Photoelemente $P_A$, $P_C$ an einen Verstärker $V_1$ und die Photoelemente $P_B$, $P_D$ an einen Verstärker $V_2$ in Differenz geschaltet (Fig. 6).

Am Ausgang der Verstärker $V_1$, $V_2$ enstehen Analogsignale $S_1$, $S_2$, deren Nullsymmetrie und gegenseitige Phasenlage durch Drehen der Schrauben $T_{A_1}$, $T_{A_2}$, $T_{B_1}$, $T_{B_2}$, $T_C$, $T_D$ eingestellt werden können, so dass sie für eine genaue Unterteilung der Signalperiode geeignet sind.

Die Teilsignale $S_{A_1}$, $S_{A_2}$ können zum Analogsignal $S_B$ auch um den Phasenwinkel $(\varphi + \alpha_1)$, $(\varphi - \alpha_2)$ versetzt sein.

Die partielle Abdeckung der Teilfelder und der Abtastfelder kann in nicht gezeigter Weise auch durch Blenden erfolgen.

**Patentansprüche**

1. Lichtelektrische Längen- oder Winkelmesseinrichtung mit einer Messteilung und einer diese Messteilung abtastenden Abtasteinheit an zwei relativ zueinander verschiebbaren Objekten, bei der die Abtasteinheit wenigstens zwei zueinander versetzte Abtastfelder zur Gewinnung zueinander phasenversetzter Analogsignale aufweist, die einer Auswerteeinrichtung zugeführt werden, dadurch gekennzeichnet, dass wenigstens ein Abtastfeld (A, B) aus mindestens zwei Teilfeldern ($A_1$, $A_2$, $B_1$, $B_2$) besteht, dass die Teilfelder ($A_1$, $A_2$, $B_1$, $B_2$) derart zueinander versetzt sind, dass das aus dem einen Teilfeld ($A_1$, $B_1$) gewonnene analoge Teilsignal ($S_{A_1}$, $S_{B_1}$) zu einem vorgegebenen Phasenwinkel $\varphi$ um einen positiven Winkel $+ \alpha_1$ und das aus dem anderen Teilfeld ($A_2$, $B_2$) gewonnene analoge Teilsignal ($S_{A_2}$, $S_{B_2}$) um einen negativen Winkel $- \alpha_2$ phasenversetzt sind, dass die Teilfelder ($A_1$, $A_2$, $B_1$, $B_2$) zur Einstellung des Phasenwinkels $\varphi$ partiell abdeckbar sind und dass sich das dem Abtastfeld (a, B) zugehörige Analogsignal ($S_A$, $S_B$) aus den aus den Teilfeldern ($A_1$, $A_2$, $B_1$, $B_2$) gewonnenen analogen Teilsignalen ($S_{A_1}$, $S_{A_2}$, $S_{B_1}$, $S_{B_2}$) zusammensetzt.

2. Messeinrichtung nach Anspruch 1, dadurch gekennzeichnet, dass zur partiellen Abdeckung der Teilfelder ($A_1$, $A_2$, $B_1$, $B_2$) Schrauben ($T_{A_1}$, $T_{A_2}$, $T_{B_1}$, $T_{B_2}$) vorgesehen sind.

3. Messeinrichtung nach Anspruch 1, dadurch gekennzeichnet, dass zur partiellen Abdeckung der Teilfelder Blenden vorgesehen sind.

4. Messeinrichtung nach Anspruch 1, dadurch gekennzeichnet, dass den beiden Teilfeldern ($A_1$, $A_2$, $B_1$, $B_2$) des Abtastfeldes (A, B) ein gemeinsames Photoelement ($P_A$, $P_B$) zugeordnet ist.

**Claims**

1. Photo-electrical length or angle measuring device comprising a measuring graduation and a scanning unit, which scans this measuring graduation, at two objects which are displaceable relative to each other, in which device the scanning unit is provided with at least two scanning sections, which are offset with respect to each other, for obtaining analog signals which are displaced in phase with respect to each other and which are supplied to an analysing device, characterised in that at least one scanning section of (A, B) consists of at least two part sections of ($A_1$, $A_2$, $B_1$, $B_2$) that the part sections ($A_1$, $A_2$, $B_1$, $B_2$) are offset with respect to each other in such a manner that the analog part signal ($S_{A_1}$, $S_{B_1}$) obtained from one part section of ($A_1$, $B_1$)

is displaced in phase with respect to a predetermined phase angle $\varphi$ by a positive angle $+ \alpha_1$ and the analog part signal ($S_{A_2}$, $S_{B_2}$) obtained from the other part section ($A_2$, $B_2$) is displaced in phase by a negative angle $- \alpha_2$ that the part sections ($A_1$, $A_2$, $B_1$, $B_2$) can be partially covered for adjusting the phase angle $\varphi$ and that the analog signal ($S_A$, $S_B$) associated with the scanning section (A, B) is composed of the analog part signals ($S_{A_1}$, $S_{A_2}$, $S_{B_1}$, $S_{B_2}$) obtained from the part sections ($A_1$, $A_2$, $B_1$, $B_2$).

2. Measuring device according to claim 1, characterised in that screws ($T_{A_1}$, $T_{A_2}$, $T_{B_1}$, $T_{B_2}$) are provided for the partial covering of the part sections ($A_1$, $A_2$, $B_1$, $B_2$).

3. Measuring device according to claim 1, characterised in that diaphragms are provided for the partial covering of the part sections.

4. Measuring device according to claim 1, characterised in that the two part sections ($A_1$, $A_2$, $B_1$, $B_2$) of the scanning section of (A, B) are associated with one common photocell ($P_A$, $P_B$).

**Revendications**

1. Dispositif photoélectrique de mesure de longueurs ou d'angles, avec une graduation de mesure et une unité de balayage balayant cette graduation de mesure, sur deux objets déplaçables l'un par rapport à l'autre, où l'unité de balayage présente au moins deux champs de balayage décalés l'un par rapport à l'autre afin d'obtenir des signaux analogiques en décalage de phase l'un par rapport à l'autre qui sont transmis à une unité d'évaluation, caractérisé par le fait qu'au moins un champ de balayage (A, B) est constitué d'au moins deux champs partiels ($A_1$, $A_2$, $B_1$, $B_2$), que les champs partiels ($A_1$, $A_2$, $B_1$, $B_2$) sont décalés l'un par rapport à l'autre de sorte telle que le signal analogique partiel ($S_{A_1}$, $S_{B_1}$) obtenu à partir d'un ($A_1$, $B_1$) des champs partiels est en décalage de phase d'un angle positif $+ \alpha_1$ par rapport à un angle de phase $\varphi$ prédéterminé, et le signal analogique partiel ($S_{A_2}$, $S_{B_2}$) obtenu à partir de l'autre champ partiel ($A_2$, $B_2$) d'un angle négatif $- \alpha_2$, que les champs partiels ($A_1$, $A_2$, $B_1$, $B_2$) peuvent être partiellement recouverts afin de régler l'angle de phase $\varphi$, et que le signal analogique ($S_A$, $S_B$) correspondant au champ de balayage (A, B) est composé des signaux analogiques partiels ($S_{A_1}$, $S_{A_2}$, $S_{B_1}$, $S_{B_2}$) obtenus à partir des champs partiels ($A_1$, $A_2$, $B_1$, $B_2$).

2. Dispositif de mesure selon la revendication 1, caractérisé par le fait qu'en vue du recouvrement partiels des champs partiels ($A_1$, $A_2$, $B_1$, $B_2$), il est prévu des vis ($T_{A_1}$, $T_{A_2}$, $T_{B_1}$, $T_{B_2}$).

3. Dispositif de mesure selon la revendication 1, caractérisé par le fait qu'en vue du recouvrement partiel des champs partiels, il est prévu des écrans.

4. Dispositif de mesure selon la revendication 1, caractérisé par le fait qu'un élément photoélectrique commun ($P_A$, $P_B$) est affecté aux deux champs partiels ($A_1$, $A_2$, $B_1$, $B_2$) du champ de balayage (A, B).

FIG. 1a

B A 5 1

X

2

c C

7b 7a

$(n+\frac{1}{2})\cdot C$

FIG. 1b

6b 6a

2 1

7b 7a

5

4

3

FIG. 2

$T_B$ $T_{A_1}$ $T_{A_2}$

$P_B$ B $A_1$ $A_2$ $P_A$

5'

FIG. 3a

$S_B$

$\varphi$

$S_A$

$S_{A_1}$ $S_{A_2}$

FIG. 3b

$S_B$

$\varphi'$

$S_A'$

$S_{A_1}$ $S_{A_2}'$

FIG. 3c

$S_B$

$\varphi''$

$S_A''$

$S_{A_1}''$ $S_{A_2}$

FIG. 4

FIG. 5

FIG. 6

FIG. 7

7